# EUROPÄISCHE PATENTSCHRIFT

(11) **EP 2 176 040 B1**
(45) Veröffentlichungstag und Bekanntmachung des Hinweises auf die Patenterteilung: **17.01.2018**
(21) Anmeldenummer: 08785152.3
(22) Anmeldetag: 28.07.2008
(51) Int. Cl.: B05C 5/02, B25J 15/04, B25J 19/00, B25J 19/02, B25J 15/00

(54) **DREHANSCHLUSSKUPPLUNG**
ROTARY COUPLING
SYSTÈME D'ASSEMBLAGE PAR JOINT TOURNANT

(30) Priorität: 02.08.2007 DE 202007010812 U; 18.03.2008 DE 202008003757 U
(43) Veröffentlichungstag der Anmeldung: 21.04.2010
(73) Patentinhaber: KUKA Systems GmbH, 86165 Augsburg (DE)
(72) Erfinder: HARTMANN, Gerhard, 86485 Biberbach (DE); BERNSAU, Andreas, 86165 Augsburg (DE); RADLER, Jürgen, 89343 Jettingen Scheppach (DE)
(74) Vertreter: Ernicke, Klaus Stefan
(86) Internationale Anmeldenummer: PCT/EP2008/006202
(87) Internationale Veröffentlichungsnummer: WO 2009/015850

(56) Entgegenhaltungen:
- EP-A- 0 110 644
- EP-A- 0 537 923
- EP-A- 1 447 183
- WO-A-93/17836
- WO-A-2006/035259
- DE-A1- 3 244 053
- DE-A1- 19 936 716
- DE-C1- 3 409 689
- DE-C1- 19 945 537
- DE-T2- 69 216 847
- JP-A- 7 232 110
- JP-A- 52 075 762
- JP-A- 60 113 782
- JP-A- 2004 136 371
- US-A- 4 626 013
- US-A- 4 945 429
- US-A- 5 974 643

## Beschreibung

Die Erfindung betrifft eine Drehanschlusskupplung mit den Merkmalen im Oberbegriff des Hauptanspruchs.

In der Praxis werden robotergeführte Werkzeuge direkt mit dem Abtriebsflansch einer mehrachsigen Roboterhand verbunden. Wenn ein Werkzeugwechsel gewünscht wird, kommen außerdem Wechselkupplungen zum Einsatz. Auch bei Wechselkupplungen lässt sich immer nur ein Werkzeug mit der Roboterhand koppeln. Die Werkzeuge können allenfalls Zusatzachsen besitzen.

Aus der Praxis ist es ferner bekannt und üblich, Bördelfalze oder sog. Falznähte an Karosseriebauteilen mit einer schützenden Abdichtung zu versehen. Dies ist vor allem an sog. Anbauteilen wichtig, bei denen die Falznähte beim fertigen Fahrzeug im Sichtbereich liegen. Derartige Anbauteile sind z.B. Türen und Klappen, wie Kofferraumdeckel und Motorhaube, aber auch Schiebedächer etc. Diese Anbauteile werden bereits im Fertigungsprozess nach dem Bördeln oder Falzen mit der Abdichtung versehen. Dies geschieht vor der Montage der Anbauteile mittels Schwenklagern oder dergleichen an der Karosserie. Dies birgt die Gefahr einer Schädigung der Abdichtung bei den nachfolgenden Handhabungs- und Montagevorgängen. Außerdem erfolgt das Abdichten vor der Grundierung der Karosserie- bzw. der Korrosionsschutzbehandlung. Hierdurch ist kein optimaler Korrosionsschutz an der Falznaht gegeben, was insbesondere mit Hinblick auf die Spaltkorrosion im Biege- und Falzbereich kritisch sein kann. Das frühe Aufbringen der Abdichtung im Fertigungsprozess des Anbauteils bedingt ferner die zusätzliche Anordnung einer Heizeinrichtung, z.B. eines Ofens oder induktiven Gelieranlage, um das Dichtmittel und den im Falzbereich ggf. eingebrachten Klebstoff thermisch zu behandeln und vorzugelieren.

Die DE 692 16 847 T2 offenbart einen Roboter mit einer Schweißklaue und einer an der Roboterhand zu befestigenden Gelenkverbindung in der Art eines fluidischen und elektrischen Schleifrings, um Medien von einer stationären Fluidversorgung und einem stationären Transformator der vom Roboter bewegten Schweißklaue zuzuführen.

Die DE 199 36 716 befasst sich mit einem Roboter, der mittels eines Düsenkopfs an der Roboterhand einen Kunststoffstrang auf einem einzelnen, auf einer tischartigen Unterlage ruhenden Fahrzeugteil vor dessen weiterer Montage aufbringt.

Es ist daher Aufgabe der vorliegenden Erfindung, eine bessere Anschlussmöglichkeit für Werkzeuge oder Arbeitsgeräte an einem Roboter aufzuzeigen.

Die Erfindung löst diese Aufgabe mit den Merkmalen im Hauptanspruch.
Die beanspruchte Drehanschlusskupplung ermöglicht es, an der Roboterhand mehrere Arbeitsgeräte und Zusatzgeräte gemeinsam und nebeneinander anzuordnen, wobei das Zusatzgerät mittels einer Kupplungseinrichtung wahlweise drehschlüssig mit dem Arbeitsgerät gekuppelt oder entkuppelt werden kann. Beim Entkuppeln kann es mit einem Handgehäuse der Roboterhand, ggf. über eine Momentenstütze, drehfest verbunden werden.

Dies bietet prozesstechnische Vorteile für das Zusatzgerät, welches bei Bedarf mit dem Arbeitsgerät mitbewegt und insbesondere mitgedreht werden kann, um mit diesem entsprechend zu kooperieren. Dies ist z.B. vorteilhaft, wenn das Zusatzgerät eine Vermessungseinrichtung ist, mit der vorab offline oder online während des Arbeitsprozesses die Arbeitsstelle beobachtet und die Funktion des Arbeitsgeräts überwacht werden kann. Bei Nichtbedarf kann das Zusatzgerät abgekoppelt werden und in einer störungsunkritischen Stellung verharren. Ferner ist es möglich, zwei oder mehr solcher Geräte relativ zueinander zu bewegen, indem mit dem Handgehäuse eine gezielte Zusatzbewegung ausgeführt wird.

Die beanspruchte Drehanschlusskupplung lässt sich für beliebige Arbeitsgeräte oder Werkzeuge und Arbeitsprozesse einsetzen. Besondere Vorteile bestehen für eine Auftragvorrichtung und ein Auftraggerät sowie ein Auftragsverfahren für pastöse oder flüssige Dichtmittel.

Klebstoff thermisch zu behandeln und vorzugelieren.

Es ist daher Aufgabe der vorliegenden Erfindung, eine bessere Anschlussmöglichkeit für Werkzeuge oder Arbeitsgeräte an einem Roboter aufzuzeigen.

Die Erfindung löst diese Aufgabe mit den Merkmalen im Hauptanspruch.
Die beanspruchte Drehanschlusskupplung ermöglicht es, an der Roboterhand mehrere Arbeitsgeräte und Zusatzgeräte gemeinsam und nebeneinander anzuordnen, wobei das Zusatzgerät mittels einer Kupplungseinrichtung wahlweise drehschlüssig mit dem Arbeitsgerät gekuppelt oder entkuppelt werden kann. Beim Entkuppeln kann es mit einem Handgehäuse der Roboterhand, ggf. über eine Momentenstütze, drehfest verbunden werden.

Dies bietet prozesstechnische Vorteile für das Zusatzgerät, welches bei Bedarf mit dem Arbeitsgerät mitbewegt und insbesondere mitgedreht werden kann, um mit diesem entsprechend zu kooperieren. Dies ist z.B. vorteilhaft, wenn das Zusatzgerät eine Vermessungseinrichtung ist, mit der vorab offline oder online während des Arbeitsprozesses die Arbeitsstelle beobachtet und die Funktion des Arbeitsgeräts überwacht werden kann. Bei Nichtbedarf kann das Zusatzgerät abgekoppelt werden und in einer störungsunkritischen Stellung verharren. Ferner ist es möglich, zwei oder mehr solcher Geräte relativ zueinander zu bewegen, indem mit dem Handgehäuse eine gezielte Zusatzbewegung ausgeführt wird.

Die beanspruchte Drehanschlusskupplung lässt sich für beliebige Arbeitsgeräte oder Werkzeuge und Arbeitsprozesse einsetzen. Besondere Vorteile bestehen für eine Auftragvorrichtung und ein Auftraggerät sowie ein Auftragsverfahren für pastöse oder flüssige Dichtmittel.

Die Erfindung betrifft ferner eine integrierte Leitungsführung für die Versorgung von Zusatzgeräten, die in besonders vorteilhafter Weise in Verbindung mit der beanspruchten Drehanschlusskupplung eingesetzt werden kann, die aber auch in anderen Fällen und bei anderen Kupplungen von Vorteil ist. Belastungs- und störkritische Leitungen, z.B. Signalleitungen für Messsignale eines Zusatzgeräts, können in einer Spiralführung zwischen Leitungsanschlüssen geführt werden, was die Belastung und damit die Fehleranfälligkeit wesentlich reduziert. Andere, weniger kritische Leitungen können über eine drehbare Medienkupplung, z.B. in Form eines Schleifrings, geführt werden. Die integrierte Leitungsführung hat für beide Anschlussarten den Vorteil, dass die Leitungen belastungsgünstig vom Roboter zum Zusatzgerät geführt werden können. Insbesondere kann hierbei der externe Leitungsanschluss drehfest mit dem Handgehäuse der Roboterhand direkt oder über eine Momentenstütze verbunden sein. Von diesem externen Leitungsanschluss aus kann die Leitungsführung entlang von ein oder mehreren Roboterarmen ebenfalls belastungs- und störgünstig verlegt sein. Insbesondere ist es möglich, alle oder zumindest einen Großteil der für die ein oder mehreren Werkzeuge oder Geräte benötigten Leitungen in einem Bündel gemeinsam zu führen und entlang von ein oder mehreren Roboterarmen bis zum Bereich der Roboterhand zu verlegen.

Die Applikation einer Abdichtung an bereits montierten Anbauteilen schränkt die Zugänglichkeit der Falznähte und der Applikationsstellen für das Dichtmittel ein. Die Falznähte weisen außerdem in der Regel zur Fahrzeuginnenseite und sind in Schließstellung der Anbauteile von außen nicht sichtbar. Der Dichtmittelauftrag kann daher in der Regel nicht mit Sichtkontakt kontrolliert werden. Zur Lösung dieses Problems sieht die Erfindung eine Auftragsvorrichtung vor, die einen solchen verdeckten Auftrag mit hoher Präzision erlaubt und auch eine Zugangsmöglichkeit durch schmale Spalte an Anlenkstellen der Anbauteile, insbesondere an der mit den Gelenken versehenen Bauteilkante, bietet. Hierfür schlägt die Erfindung ein besonders geeignetes Auftraggerät vor. Zur Sicherung der exakten Positionierung des Auftragegeräts ist eine genaue Vermessung des Anbauteils in der für den Dichtmittelauftrag vorgesehenen und ggf. geöffneten Arbeitsstellung gegeben. In dieser Arbeitsstellung wird das Anbauteil auch fixiert, so dass nach Auswertung des Messergebnisses das Auftraggerät mit höchster Präzision geführt und das Dichtmittel auch an verdeckten Falzstellen mit hoher Genauigkeit und Qualität appliziert werden kann.

Für den Ablauf des Abdichtungsprozesses ist es günstig, die Fahrzeugkarosserie in der Bearbeitungsposition global zu vermessen. Nach diesem Messergebnis können ggf. vorhandene Öffnungs- und Halteeinrichtungen für das Anbauteil genau gesteuert werden. Ferner ist eine Vorpositionierung der Auftragvorrichtung und der mitgeführten Vermessungseinrichtung möglich. Dies spart Zeit und erhöht die Messgenauigkeit. Alternativ kann eine in ihren Abmessungen bekannte Fahrzeugkarosserie so genau positioniert werden, dass eine globale Vermessung reduziert oder eingespart werden kann.

Bei einer Fahrzeugkarosserie mit mehreren Anbauteilen kann es günstig sein, zunächst alle Anbauteile in eine vorgegebene und geöffnete oder geschlossene Arbeitsstellung zu bringen, und in dieser Stellung zu fixieren sowie anschließend lokal mit der von der Auftragvorrichtung mitgeführten Vermessungseinrichtung zu vermessen. Anschließend wird der Dichtmittelauftrag anhand der Messergebnisse durchgeführt, wobei der Manipulator und die Auftragvorrichtung entsprechend gesteuert werden. Das Dichtmittel kann an allen Anbauteilen aufgetragen werden, was vorzugsweise ohne Anpressdruck und insoweit berührungslos geschieht. Unerwünschte Krafteinwirkungen auf die Anbauteile und die Fahrzeugkarosserie sowie damit einhergehende mögliche Positionsänderungen der Fahrzeugkarosserie und der Anbauteile werden vermieden. Aus dem gleichen Grund werden erst nach Abschluss aller Dichtmittelaufträge die Anbauteile wieder freigegeben und ggf. in die Schließposition bewegt.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Arbeitsvorrichtung mit einem robotergeführten Arbeitsgerät in Arbeitsstellung an einer Fahrzeugkarosserie in perspektivischer Ansicht,
- Figur 2:: eine vergrößerte Detaildarstellung der Anordnung von Figur 1,
- Figur 3 und 4:: eine Variante der Arbeitsvorrichtung in verschiedenen perspektivischen Ansichten.
- Figur 5 und 6:: eine Auftragvorrichtung mit einem an einer Roboterhand aufgebrachten Arbeitsgerät und einer mitgeführten Vermessungseinrichtung in verschiedenen perspektivischen Ansichten,
- Figur 7 und 8:: perspektivische Darstellungen des Arbeitsgeräts und der Vermessungseinrichtung mit verschiedenen Ankuppelstellungen in perspektivischer Ansicht,
- Figur 9:: eine perspektivische Funktionsdarstellung der Vermessungseinrichtung am Auftraggerät,
- Figur 10 und 11:: verschiedene perspektivischen Ansichten einer Variante des Arbeitsgeräts mit einem Drehkupplungsanschluss und einer mitgeführten Vermessungseinrichtung an der Roboterhand,
- Figur 12 und 13:: verschiedene perspektivischen Ansichten des Drehkupplungsanschlusses,
- Figur 14 und 15:: Kupplungsansichten von oben und unten
- Figur 16 und 17:: ein Schnitt durch den Drehkupplungsanschluss gemäß Schnittlinie XVI - XVI von Figur 14 und eine geklappte Seitenansicht,
- Figur 18 und 19:: ein Schnitt durch den Drehkupplungsanschluss gemäß Schnittlinie XVIII - XVIII von Figur 15 und eine geklappte Seitenansicht und
- Figur 20 und 21:: ein geöffneter Drehkupplungsanschluss in verschiedenen perspektivischen Ansichten.

Die Erfindung betrifft eine Arbeitsvorrichtung (11) mit ein oder mehreren robotergeführten Arbeitsgeräten (23) und evtl. weiteren Zusatzgeräten (30), insbesondere einer mitgeführten Vermessungseinrichtung, und einem Drehkupplungsanschluss (62). Sie betrifft insbesondere den Drehkupplungsanschluss (62) und eine integrierte Leitungsführung (74).

Ferner befasst sich die Erfindung mit einem Verfahren zum Auftrag eines Dichtmittels (8) an einem Falz (7) eines Anbauteils (4) einer Fahrzeugkarosserie (3) und einer Ausbildung der Arbeitsvorrichtung (11) als Auftragvorrichtung für das Dichtmittel.

Die Fahrzeugkarosserie (3) kann für beliebige Fahrzeuge vorgesehen sein. In der gezeigten Ausführungsform handelt es sich um Landfahrzeuge, insbesondere Pkws oder Lkws.

Alternativ kann die Fahrzeugkarosserie (3) für beliebige andere Land-, Wasser- und Luftfahrzeuge vorgesehen sein und eine entsprechend andere Formgebung aufweisen. Die Fahrzeugkarosserie (3) besteht aus beliebigen Materialien, insbesondere Metall, Kunststoff oder Verbundwerkstoffen. Die Fahrzeugkarosserie (3) weist ein oder mehrere Anbauteile (4) auf. Dies sind Bauteile, die an Öffnungen der Fahrzeugkarosserie (3) beweglich montiert werden, z.B. Fahrzeugtüren, Kofferraumdeckel, Motorhaube oder dergleichen. Die Anbauteile (4) können ebenfalls aus beliebigen Werkstoffen, insbesondere Metall, bestehen.

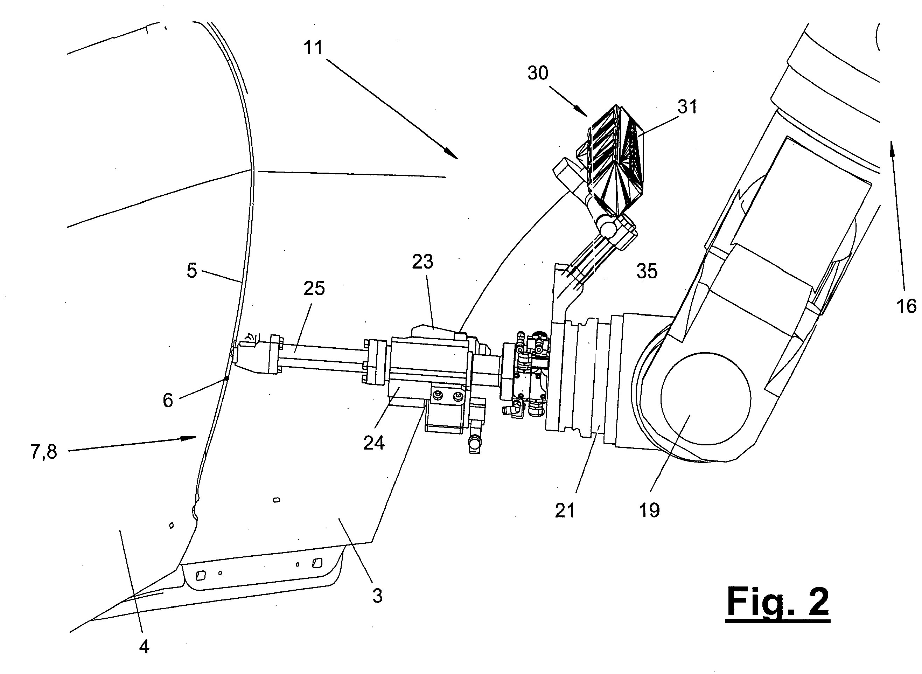

Die Anbauteile (4) sind mehrlagig aufgebaut und weisen ein oder mehrere Falze (7) oder Falznähte auf, die in Figur 2 nur angedeutet sind und die sich in der Regel in der Nähe von Bauteilkanten oder -rändern (5) befinden und an diesen entlang erstrecken. Dies können Außenränder oder Innenränder von Bauteilöffnungen sein. Im Rand- und Kontaktbereich der Bleche kann ein Klebstoff eingebracht sein. Hierbei kann es sich um einen schnell aushärtenden Kleber, insbesondere einen Zweikomponentenkleber, handeln, der dank der schnellen Aushärtung bei nachfolgenden Prozessen, insbesondere einer Korrosionsschutzbehandlung, nicht beeinträchtigt und insbesondere nicht ausgewaschen wird. Am Ende des umgebogenen Flansches und der hier gebildeten stufenartigen Übergangsstelle zum Innenblech ist eine schützende Abdichtung außenseitig aufgebracht. Sie besteht aus einem geeigneten Dichtmittel mit beliebiger Materialzusammensetzung und Konsistenz. Vorzugsweise handelt es sich um ein flüssiges oder pastöses Dichtmittel, welches von einer Arbeitsvorrichtung (11) bzw. Auftragvorrichtung mittels einer Düse (26) in einem Sprühauftrag oder Extrudierauftrag auf die Übergangsstelle aufgebracht werden kann. Der Auftrag erfolgt weitgehend kraftlos und ohne Berührung der Düse (26) mit dem Falz. Das Dichtmittel wird entlang einer Bauteilkante (5) vorzugsweise kontinuierlich und ohne Absetzen aufgetragen. Nur in den Eckbereichen oder an einem anderen Übergang zu einer anderen Bauteilkante (5) und einer dortigen Falznaht wird der Auftrag ggf. abgesetzt, wobei der nächste Auftrag mit Überlappung beginnt. Scharfe Eckbereiche können auch mit einer ausschwingenden Schleife und einem entsprechend gesteuerten Austrag überfahren werden. Das Dichtmittel wird im wesentlichen kontinuierlich gefördert und aufgetragen, wobei der Ausfluss gesteuert und dosiert werden kann. An scharfen Eckbereichen ist die vorerwähnte kurzzeitige Unterbrechung des Auftrags für die Umorientierung der Düse (26) möglich.

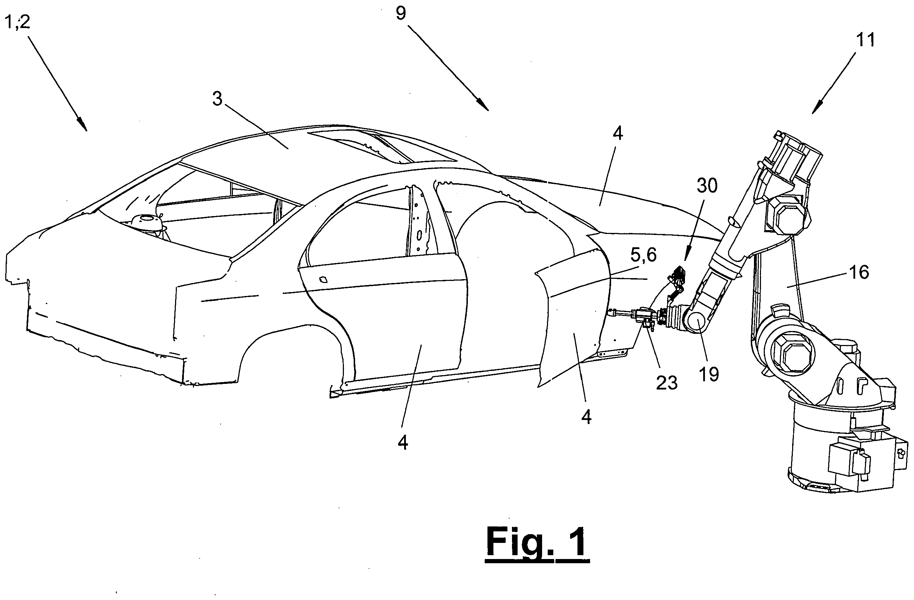

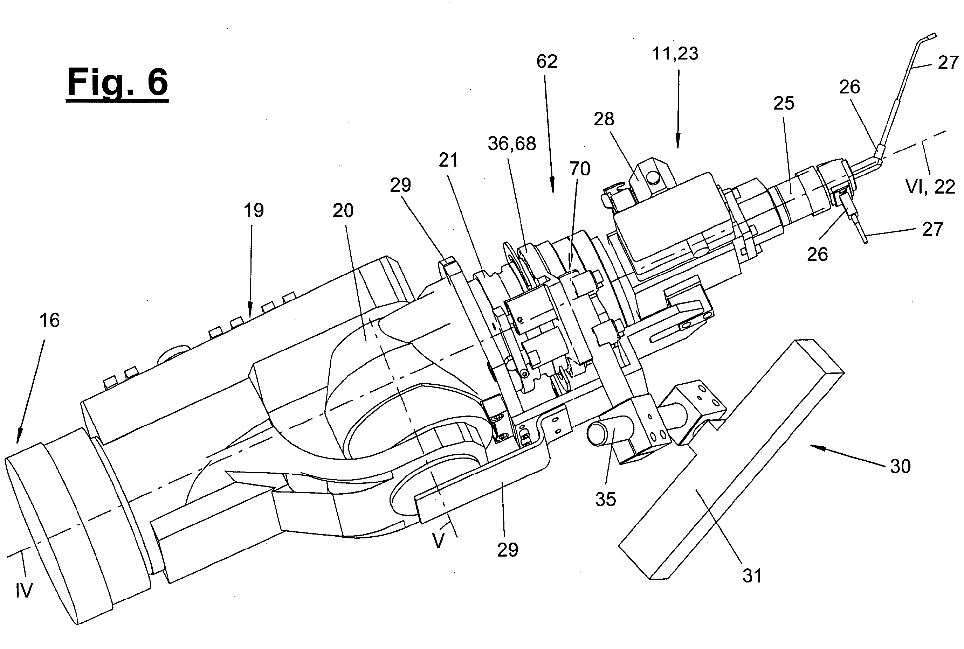

Die Auftragvorrichtung (11) ist in Figur 1 bis 11 dargestellt und nachfolgend näher beschrieben ist. Die Auftragvorrichtung (11) kann Bestandteil einer Bearbeitungseinrichtung (9), insbesondere einer Abdichteinrichtung sein, welche außer ein oder mehreren Auftragvorrichtungen (11) weitere Komponenten enthalten kann. Dies kann z.B. eine Vermessungseinrichtung, eine Reinigungsvorrichtung, eine Prüfeinrichtung, eine Öffnungseinrichtung und eine Halteeinrichtung sein.

Die Bearbeitungseinrichtung (9) kann wiederum Bestandteil von mindestens einer Bearbeitungsstation (2), insbesondere einer sog. Abdichtstation, sein. Die Abdichtstation (2) kann ihrerseits Teil einer Fertigungsanlage (1) für ein Fahrzeug sein.

Der Auftrag des Dichtmittels erfolgt an einem Anbauteil (4) nach dessen Montage an der Fahrzeugkarosserie (3) mittels ein oder mehreren Gelenken, Führungen oder dergleichen. Diese bereits montierte Bauteillage wird als Montagestellung bezeichnet. Zum Dichtmittelauftrag kann das Anbauteil (4) bei unzureichender Zugänglichkeit einer Falznaht geöffnet werden, was innerhalb der Bearbeitungsstation (2) geschehen kann und von der vorerwähnten Öffnungseinrichtung durchgeführt wird.

Die abzudichten Falze befinden sich im gezeigten Ausführungsbeispiel an der zum Fahrzeuginnenraum weisenden Seite der Anbauteile (4) und sind u.U. aus Platzgründen erst nach deren Öffnen zugänglich. Das Anbauteil (4) kann z.B. sehr dicht an den umgebenden Randbereich der Karosserieöffnung anschließen. Hierbei wird das Anbauteil (4), beispielsweise die in Figur 1 und 2 gezeigte Fahrzeugtüre, nur teilweise geöffnet, wobei an der Anlenkseite der Fahrzeugtüre und der dortigen Bauteilkante (5) ein schmaler Spalt (6) zum benachbarten Karosseriebereich entsteht. Durch diesen Spalt (6) ist der verdeckte Falz von der Rückseite her für die Auftragvorrichtung (11) zugänglich. Die anderen Falznähte sind in der Öffnungsstellung ebenfalls erreichbar.

Figur 1 bis 4 verdeutlichen die Arbeits- oder Auftragvorrichtung (11). Die Auftragvorrichtung (11) ist mehrachsig beweglich und ist für einen Dichtmittelauftrag an einer montierten und geöffneten Anbauteil (4) vorgesehen und ausgelegt. Von der Auftragvorrichtung (11) wird eine Vermessungseinrichtung (30) mitgeführt.

In den gezeigten Ausführungsbeispielen besteht die Auftragvorrichtung (11) aus einem mehrachsigen Manipulator (16), der bevorzugt als Gelenkarmroboter mit mindestens sechs rotatorischen Achsen und mit einer mehrachsigen Roboterhand (19) ausgebildet ist. Alternativ kann der Manipulator (16) eine andere Achskonfiguration mit rotatorischen und/oder translatorischen Achsen haben. In der gezeigten Ausführungsform besitzt die mehrachsige Roboterhand (19) zwei oder drei rotatorischen Achsen IV, V und VI. Die Manipulatorhand (19) besitzt ein Gehäuse (20), das in einer Gabel am Ende des letzten Roboterarms oder Auslegers um die quer liegende Handachse V schwenkbar ist, wobei die Gabel um die längs des Auslegers verlaufende Handachse IV drehbar sein kann. Die letzte Handachse VI bildet die Abtriebsachse (22) und weist ein bewegliches Abtriebsorgan (21), z.B. einen drehbaren Abtriebsflansch, auf, der in oder am Handgehäuse (20) gelagert sein kann. Am Handgehäuse (20) kann sich eine gehäusefeste Momentenstütze (29) befinden, die sich längs der Handachse VI erstreckt und über das Abtriebsorgan (21) hinaus reicht.

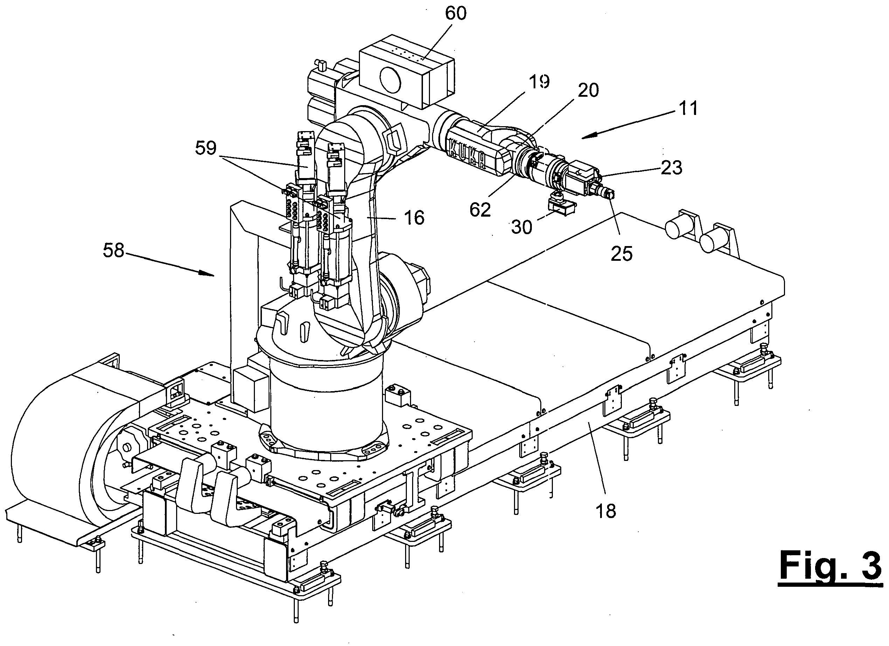

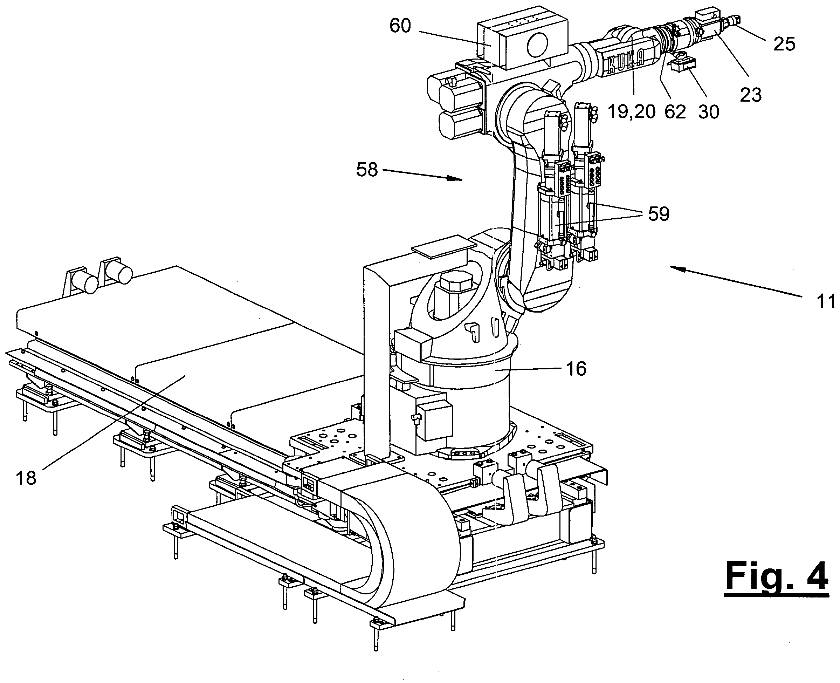

Wie Figur 3 und 4 verdeutlichen, kann der Roboter (16) auf einer Transporteinrichtung (18) angeordnet sein, welche ein oder mehrere Zusatzachsen bietet und ein Verfahren des Roboters (16) entlang der Fahrzeugkarosserie (3) in Längs- und/oder Querrichtung ermöglicht. In der gezeigten Ausführungsform ist die Transporteinrichtung (18) als Lineareinheit mit einem geschlossenen Führungssystem mit Rollenumlaufschuh sowie einem Kabelschlepp ausgebildet und weist eine begehbare Abdeckung auf. Alternativ kann der Manipulator oder Roboter (16) stationär und flurgebunden oder portalgebunden angeordnet sein.

Der Manipulator (16) trägt an seiner Manipulatorhand (19) ein Auftraggerät (23) für das Dichtmittel (8) und auch die Vermessungseinrichtung (30). Figur 1 bis 6 verdeutlichen diese Ausführung und zeigen auch die nachfolgend erläuterten Achsgeometrien.

Das Auftraggerät (23) besitzt z.B. einen Korpus (24), der mittels der Momentenstütze (29) oder dgl. drehfest mit dem Gehäuse (20) der Manipulatorhand (19) verbunden ist. Hierdurch folgt der Korpus (24) den Handbewegungen um die orthogonalen Achsen IV und V. Am Korpus (24) sind außenseitig ein oder mehrere Leitungsanschlüsse (28) angeordnet. Diese dienen zur Leitungsverbindung mit einer Dichtmittelversorgung (58). Ferner können über die Leitungsanschlüsse (28) andere Betriebsmittel, z.B. Leistungs- und Signalströme, Druckluft, Kühlflüssigkeit oder dergleichen zugeführt werden. Über diese Betriebsmittel kann auch eine ggf. im Auftragegerät (23) angeordnete Heizeinrichtung für das Dichtmittel (8) mit Energie versorgt und gesteuert werden.

Das Auftraggerät (23) besitzt ferner einen Auftragkopf (25) mit ein oder mehreren Auftragorganen für das Dichtmittel, die der Übersicht halber nicht dargestellt sind. Der Auftragkopf (25) ist im Korpus (24) beweglich, insbesondere um die Abtriebsachse (22) drehbar gelagert. Für die Dichtmitteleinspeisung in den drehbaren Auftragkopf (25) ist im Korpus (24) eine entsprechende drehgängige Leitungsdurchführung (nicht dargestellt) vorhanden. Der Auftragkopf (25) ist rückseitig über einen Drehkupplungsanschluss (62) mit dem Abtriebsflansch (21) der Manipulatorhand (19) verbunden und kann über die Roboterachse VI bzw. die Abtriebsachse (22) relativ zum Korpus (24) gedreht werden. Hierdurch können die ein oder mehreren Auftragorgane über die sechs Roboterachsen beliebig im Raum positioniert und orientiert werden.

In der gezeigten Ausführungsform für ein pastöses oder flüssiges Dichtmittel sind die Auftragorgane als Düsen (26) ausgebildet, wobei der Auftragkopf (25) ein Düsenkopf ist, von dem aus die Düsen (26) gespeist werden. Der erforderliche Speisedruck wird durch eine Dosiereinrichtung (59) mit Pumpen in der Dichtmittelversorgung (58) oder ggf. auch im Auftraggerät (23) sichergestellt. Die ggf. doppelte Dosiereinrichtung (59) ist gemäß Figur 3 und 4 z.B. seitlich an der Schwinge des Roboters (16) angebaut, der außerdem auf dem dritten Roboterarm noch eine Kühl- und/oder Heizeinrichtung (60) tragen kann.

Am Düsenkopf (25) können mehrere Düsen (26) an unterschiedlichen Seiten und mit unterschiedlicher Düsenausbildung angeordnet sein. Die Düsen (26) weisen jeweils ein vom Düsenkopf (25) abstehendes Düsenrohr (27) auf. Das Düsenrohr (27) kann für die in Figur 1 und 2 gezeigte Spaltsituation eine auf die Spaltbreite (6) abgestimmte Dicke und außerdem eine gebogene Form aufweisen, so dass es durch den Spalt (6) eingeführt und entlang des Spaltverlaufs bewegt werden kann, wobei die Düsenmündung in geeigneter Weise gegenüber dem Falz positioniert und orientiert werden kann. Für eine vorzugsweise stetige Auftragsbewegung entlang des ggf. räumlich gekrümmten Verlauf des Spalts (6) und der Falznaht kann der Manipulator (16) entsprechende mehrachsige Arm- und Handbewegungen ausführen. Hierfür ist ein Gelenkarmroboter besonders geeignet. Über die siebte Fahrachse kann eine Unterstützung erfolgen. Alternativ kann die siebte Achse für das schnelle Umpositionieren des Roboters (16) zur anderen Bauteilkante (5) bzw. Falznaht benutzt werden.

Die andere Düse (26) kann für die anderen, leicht erreichbaren Falznähte an der Unterseite und der den Türgelenken gegenüberliegenden Rückseite der Fahrzeugtüre (4) einfacher ausgebildet sein und ein gerades Düsenrohr (27) aufweisen. Dieses kann auch eine kürzere Länge als das vorbeschriebene Düsenrohr (27) für den Dichtmittelauftrag durch den Spalt (6) aufweisen.

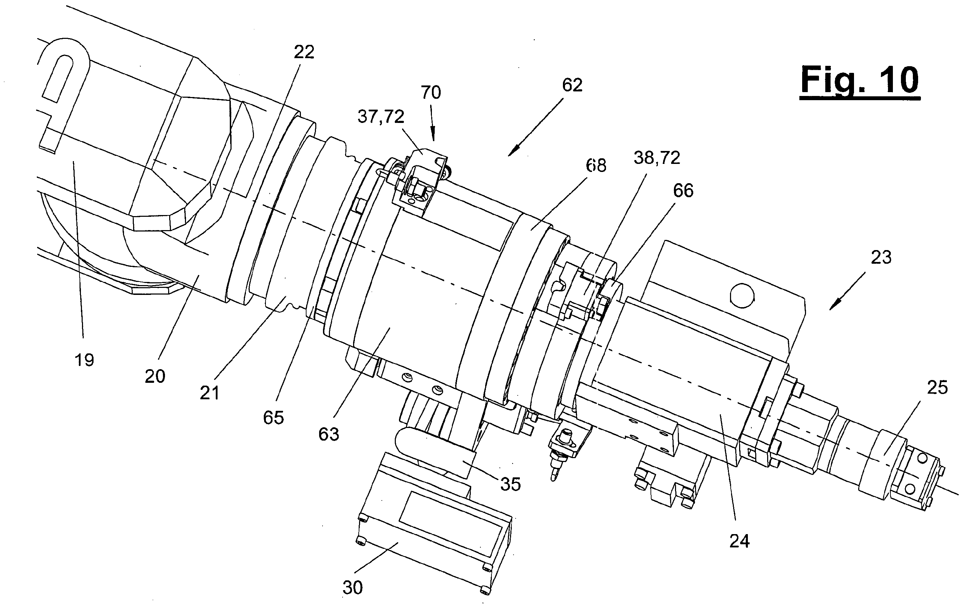

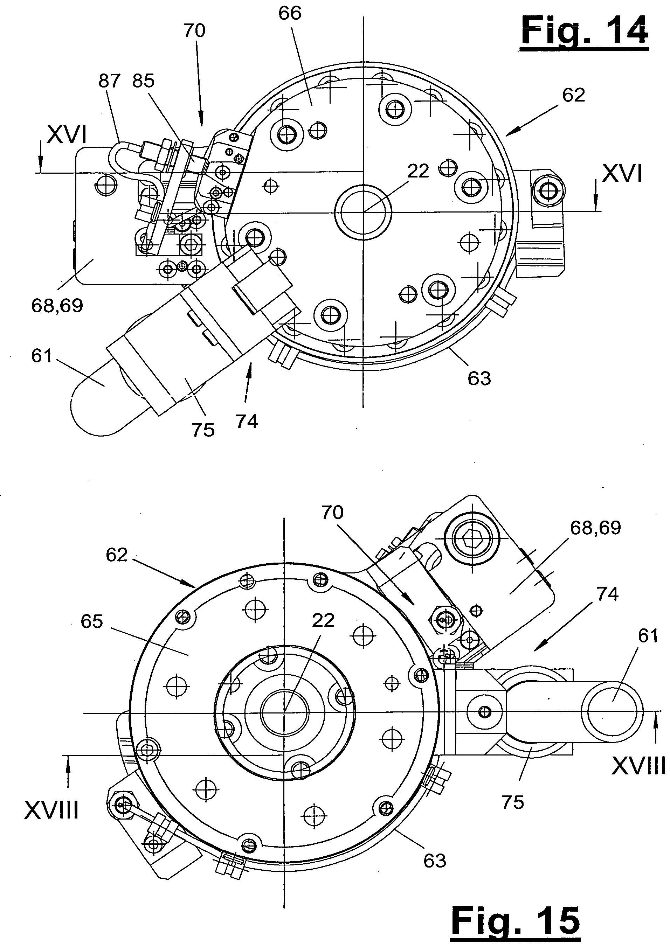

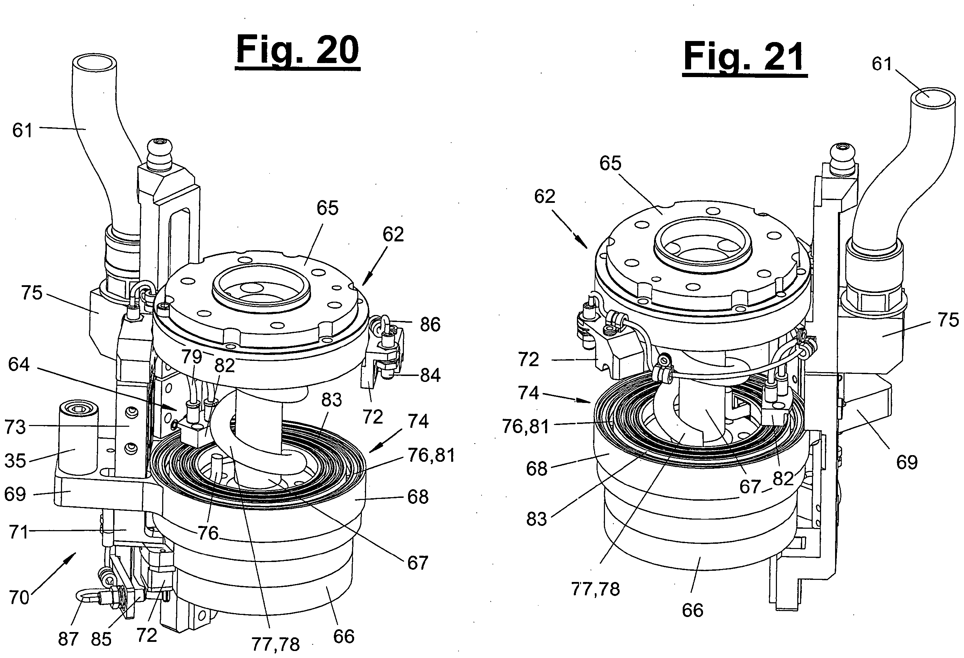

Durch die eigenständige Drehbarkeit des Düsenkopfes (25) und der Düsen (26) ist eine schnelle und behinderungsfreie Umorientierung der Düsen möglich. Der Korpus (24) mit den Leitungsanschlüssen (28) und den angebundenen Versorgungsleitungen (nicht dargestellt) für den Düsenkopf (25) braucht diesen Bewegungen nicht zu folgen und kann eine eingeschränkte Kinematik haben, die mit ein oder zwei Achsen weniger auskommt. Die Versorgungsleitungen kommen von einer Leitungszuführung (61), die in Figur 10 bis 21 näher dargestellt ist.

Die am Auftraggerät (23) angebundene und mitgeführte Vermessungseinrichtung (30) hat den Vorteil, dass sie auf das gleiche Flanschkoordinatensystem zurückgreift, auf das sich auch der TCP am vorderen Ende des oder der Düsen (26) bezieht. Hierdurch wird die Messgenauigkeit erhöht.

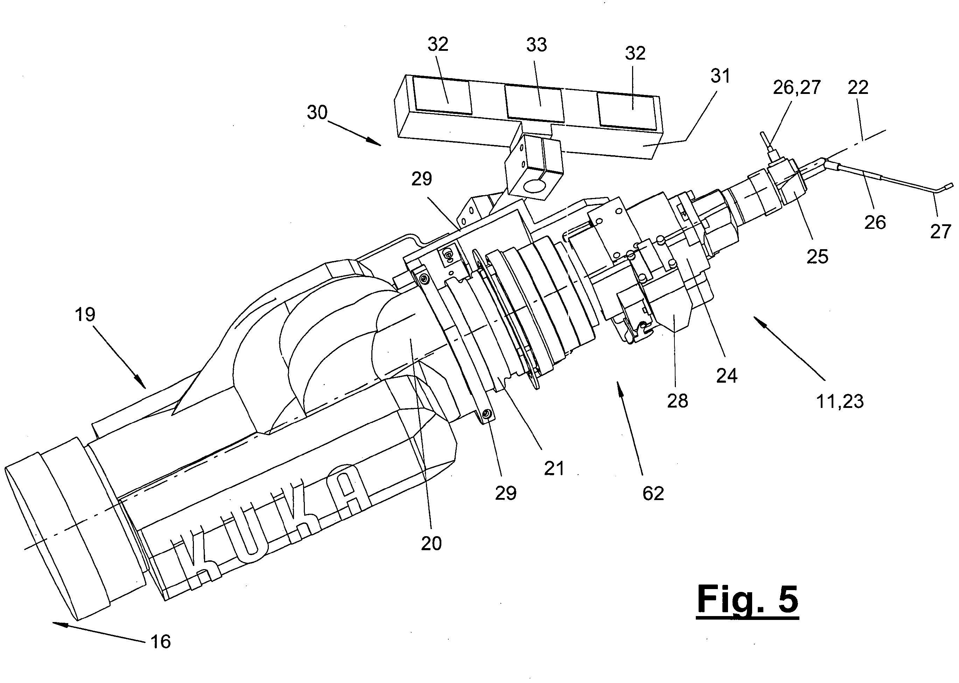

Die in Figur 5 bis 9 dargestellte Variante der Vermessungseinrichtung (30) weist einen Messkopf (31) mit einem einstellbaren Gestell (35) auf. Das Gestell (35) kann mit einem Drehteil (68) einer Drehanschlusskupplung (62) verbunden werden, das z.B. mittels eines Drehlagers (36) um die Abtriebsachse (22) drehbar am Auftraggerät (23), insbesondere am Korpus (24), gelagert sein kann. Die Drehanschlusskupplung (62) weist eine Kupplungseinrichtung (70) mit mehreren steuerbaren Kupplungselementen (71,72) und z.B. zwei Kupplungsstellen (37,38) auf. Diese erlauben je nach Betätigung der Kupplungseinrichtung (70) eine Kopplung zur Momentenstütze (29) bzw. dem Handgehäuse (20) oder zum Auftragkopf (25) bzw. zum Abtriebsorgan (21). Hierdurch kann die Vermessungseinrichtung (30) eine prozessgünstige Kinematik erhalten.

Für die anfängliche Vermessung des Anbauteils (4) kann eine Kopplung mit dem Auftragkopf (25) und der Abtriebsachse (22) bestehen, so dass alle Roboterachsen für die Vermessung zur Verfügung stehen, die entsprechend genau ausgeführt werden kann. Die Vermessungseinrichtung (30) kann hierbei durch Handachsenbewegungen und ggf. auch Bewegungen der Roboterarmachsen entlang der auftragsrelevanten Bezugspunkte des Anbauteils (4), z.B entlang der Bauteilkanten (5) bewegt werden und diese abtasten. Aus dem Messergebnis wird die exakte Form, Lage und Orientierung des Anbauteils (4) und der verdeckt liegenden und üblicherweise auf die Bauteilkanten (5) bezogenen Falznähte ermittelt. Die Flanschbreite am Falz ist bekannt, wobei der Falzvorgang in der Geometrie genau ist und eine definierte Bauteil- oder Bördelkante (5) ergibt. Hieraus kann die Lage des Flanschendes und der Übergangsstelle für die Positionierung des Dichtmittels ausreichend genau berechnet werden.

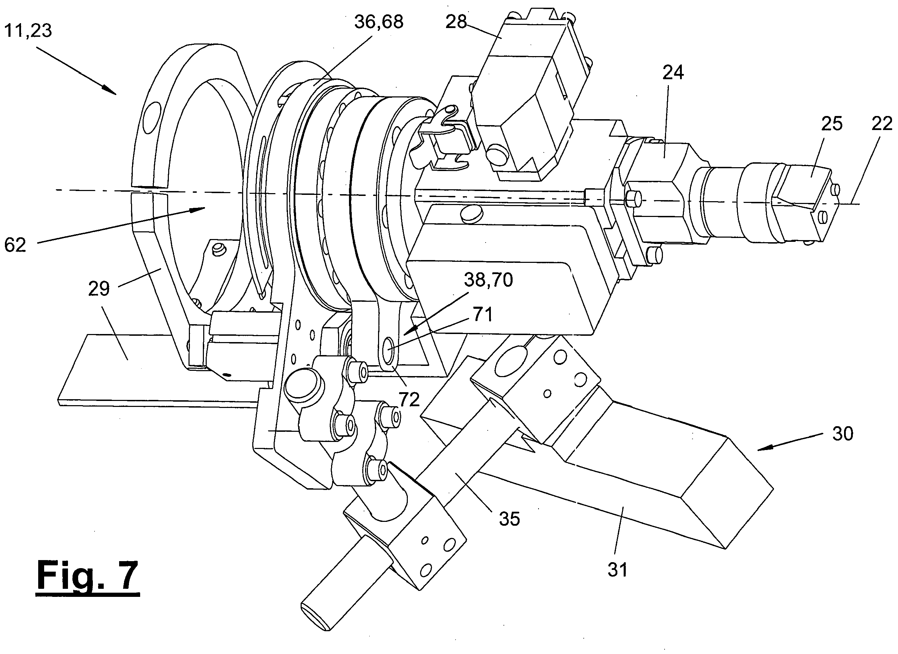

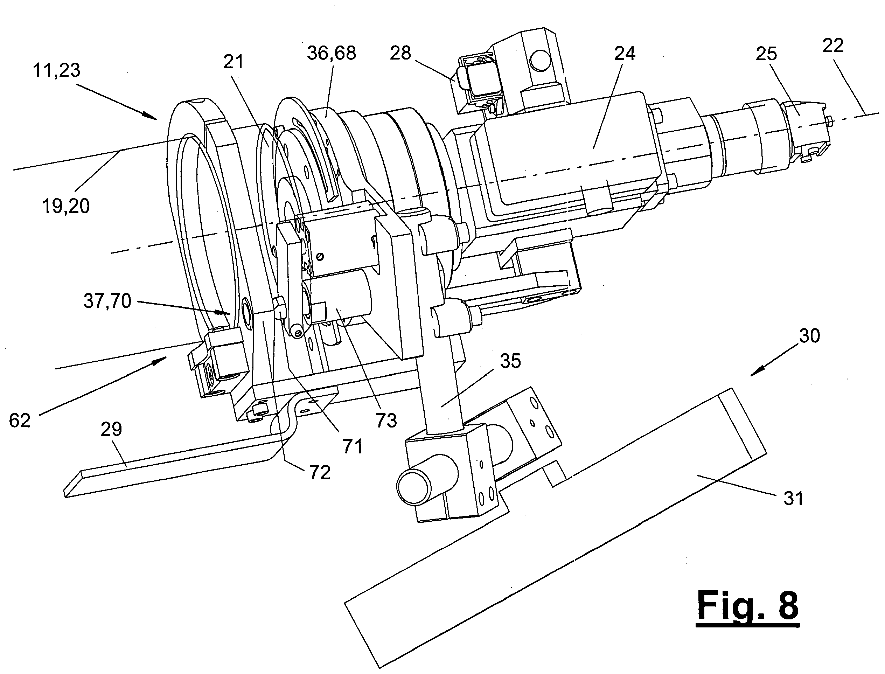

Figur 7 zeigt die Kupplungseinrichtung (70) an der Kupplungsstelle (38) in Verbindung mit der Abtriebsachse (22). In Figur 8 ist die andere Kupplungsstelle (37) dargestellt, bei der ein Eingriff an der Momentenstütze (29) besteht. Durch eine Drehung des Auftragkopfes (25) kann das Drehteil (68) in eine entsprechende Drehstellung gebracht werden, wobei die Kupplungseinrichtung (70) an der Kupplungsstelle (38) gelöst und an der Kupplungsstelle (37) betätigt wird. Die Vermessungseinrichtung (30) kann dann die gleiche eingeschränkte Kinematik wie der Korpus (24) haben. Diese Kupplungsstellung ist während des Dichtmittelauftrags vorgesehen und begünstigt ebenfalls die ungehinderte Orientierung der Auftragorgane (26). Die an der Vermessungseinrichtung (30) angeschlossenen Leitungen sind in der Ausführungsform von Figur 5 bis 9 nicht dargestellt. Sie brauchen beim Dichtmittelauftrag nur eingeschränkt oder gar nicht bewegt zu werden.

Die Kupplungseinrichtung (70) besteht aus einem am Drehteil (68) angeordneten Kupplungsantrieb (73), der auf ein ebenfalls am Drehteil (68) befindliches bewegliches Kupplungselement (71), z.B. einen axial verschiebbaren Rastbolzen, einwirkt. An der Momentenstütze (29) befindet sich ein stationäres Kupplungselement (72), welches als Einstecköffnung für den Rastbolzen (71) ausgebildet ist. Die Einstecköffnung kann sich an einem frontseitig mit dem Handgehäuse (20) verbundenen Stützring befinden. Hierdurch wird die eine Kupplungsstelle (37) gebildet.

Ein anderes relativ ortsfestes Kupplungselement (72) kann sich an einer durchgeführten Verlängerung der Drehkupplung (62) befinden, die mit der Abtriebsachse (22) verbunden ist und an welcher der Arbeitskopf (25) angeschlossen ist.

Hierdurch wird die andere Kupplungsstelle (38) gebildet.

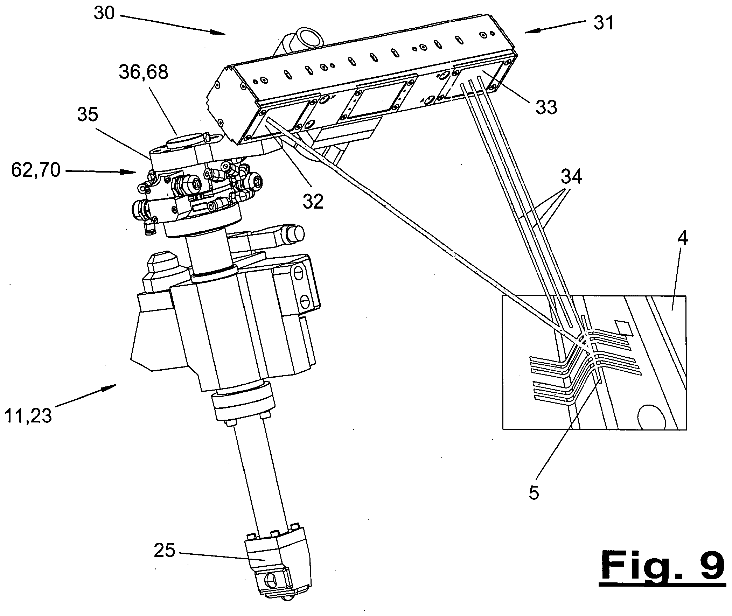

Der Messkopf (31) zur Durchführung der Vermessungen kann beliebig ausgebildet sein und mit beliebigen Messverfahren arbeiten. In der gezeigten Ausführungsform von Figur 9 kommt eine berührungsfreie optische Vermessung zum Einsatz, wobei der Messkopf (31) ein Gehäuse mit z.B. zwei Strahlquellen (33) und einem daneben angeordneten Sensor (32) aufweist. Die eine Strahlquelle (33) emittiert mehrere parallele Messstrahlen (34) zum Anbauteil (4) für die Erfassung einer stufenförmigen Bauteilkontur oder Bauteilkante (5). In der gezeigten Ausführungsform ist eine Lichtquelle (33) vorgesehen, die mehrere parallele Lichtstreifen (34) emittiert. Die an der Bauteilkante (5) auftretenden Knickstellen der Lichtspuren werden optisch erfasst lagemäßig vermessen. Sie ergeben in der Verbindung den Kantenverlauf.

Die andere Strahl- oder Lichtquelle (33) emittiert ein dichtes Bündel von Lichtstrahlen (34) zur Flächenausleuchten und zur optischen Erfassung und Vermessung der Ränder von Bohrungen oder anderen Öffnungen.

Der Sensor (32) ist als 3D-Sensor zur räumlichen Vermessung der Stufen oder Bauteilkanten (5) oder Bohrungsränder anhand der sichtbaren Lichtstreifen (34) oder Lichtbündel ausgebildet und weist z.B. eine Bildauswertung mit einem Lichtschnitt- und/oder Graubild-Verfahren auf.

Alternativ sind Kamerasysteme mit Bilderfassung und - auswertung möglich. Auch andere Messtechniken mit kapazitiven oder induktiven Kantentastern und Abstandsmessern sowie auch kontaktgebundene Messtechniken sind möglich.

Im Arbeitsbereich der Auftragvorrichtung (11) und insbesondere des Manipulators (16) sind die eingangs erwähnten Reinigungsvorrichtung und die Prüfeinrichtung für die Auftragorgane (26) angeordnet. Diese Einrichtungen können in beliebig geeigneter Weise ausgebildet sein.

Die Auftragvorrichtung (11) und die Abdichteinrichtung (9) mit den verschiedenen Komponenten können ein oder mehrere geeignete Steuerungen aufweisen. Hierbei kann auch eine Stationssteuerung vorhanden sein. Die Auftraggeräte (23) und die Dichtmittelversorgungen werden bevorzugt von der Robotersteuerung des zugehörigen Roboters (16) gesteuert. Hieran können auch die Prüf- und Reinigungsvorrichtung (12,13) angeschlossen sein. Die verschiedenen Manipulatoren (16,17) sind in ihrer Steuerung untereinander vernetzt und in ihren Funktionen aufeinander abgestimmt.

In Ergänzung der gezeigten Ausführungsformen ist außerdem eine nachträgliche Qualitätskontrolle der Abdichtungen (8) möglich. Dies kann z.B. mit einer separaten Prüfeinrichtung geschehen. Alternativ kann die vorhandene Vermessungseinrichtung (30) mit einer geeigneten Bilderfassung und -auswertung herangezogen werden. Für die Qualitätsprüfung können die Anbauteile (4) noch weiter geöffnet werden.

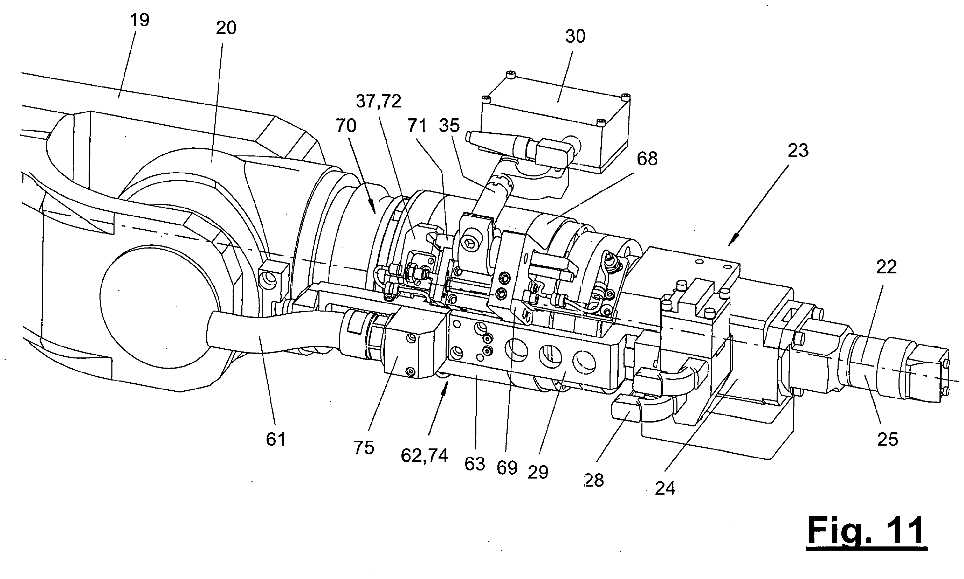

Figur 11 bis 21 zeigen eine Variante der Drehanschlusskupplung (62) und eine integrierte Leitungsführung (74).

Figur 10 und 11 zeigen eine Variante der Arbeitsvorrichtung (11) bzw. der Auftragvorrichtung, die mit einer solchen modifizierten Drehanschlusskupplung (62) ausgerüstet ist und die außerdem ein anders ausgebildetes Zusatzgerät (30) aufweist.

Die Drehanschlusskupplung (62) ist zwischen dem Abtriebsorgan (21) der Roboterhand (19) und dem Arbeits- oder Auftraggerät (23) angeordnet. Sie weist verschiedene Anschlüsse (65,66,68) für das Abtriebsorgan (21), das Arbeitsgerät (23) und das Zusatzgerät (30) auf. Die Anschlüsse (65,66) sind z.B. als stirnseitige Flansche der Drehanschlusskupplung (62) ausgebildet, an denen das Abtriebsorgan (21) und der Arbeitskopf (25) des Arbeitsgeräts (23) direkt oder ggf. unter Zwischenschaltung eines Werkzeugwechslers angeschlossen werden können. Der Korpus (24) kann auch bei dieser Ausführungsform mit der Momentenstütze (29) drehschlüssig verbunden sein. Der dritte Anschluss (68) wird von dem besagten Drehteil gebildet, welches mittels des Drehlagers (36) drehbar gelagert ist. Die Lagerstelle befindet sich bei dieser Variante an der Drehanschlusskupplung (62) und an deren Kupplungsgehäuse (63). Das Drehteil (68) ist koaxial zur Abtriebsachse (22) drehbar und weist an seiner Peripherie an mindestens einer Stelle einen radial vorspringenden Sockel (69) auf, an dem mittels einer geeigneten Aufnahme das Gestell (35) für das Zusatzgerät (30) lösbar befestigt werden kann.

Die Kupplungseinrichtung (70) ist ähnlich wie im ersten Ausführungsbeispiel ausgebildet. Sie weist einen Kupplungsantrieb (73) und ein bewegliches Kupplungselement (71) am Drehteil (68) bzw. am Sockel (69) auf. Das bewegliche Kupplungselement (71) ist z.B. als beidseitiger Rastbolzen ausgebildet, der den Sockel (69) axial durchsetzt und an beiden Enden jeweils einen Rastkopf aufweist, der mit einem relativ ortsfesten Kupplungselement (72) in Eingriff treten kann, welches z.B. als Raste ausgebildet ist. Das eine relativ ortsfeste Kupplungselement (72) ist mit der am Handgehäuse (20) befestigten Momentenstütze (29) verbunden und bildet die Kupplungsstelle (37) zur Momentenstütze (29) und zum Handgehäuse (20). Das andere relativ ortsfeste Kupplungselement (72) bildet die andere Kupplungsstelle (38) und stellt eine drehschlüssige Verbindung mit der Abtriebsachse (22) und dem Auftragkopf (25) her. Es kann an einer geeigneten Stelle angeordnet sein und befindet sich beispielsweise in der Nähe des Flansches (26) am Kupplungsgehäuse (63). Es kann alternativ am Auftragkopf (25) oder auch an der anderen Kupplungsseite im Bereich des dortigen Flansches (25) angeordnet sein. Auch hier ist eine Zuordnung zum Kupplungsgehäuse (63) oder zum Abtriebsorgan (21) möglich.

Zum Ändern der Kupplungsverbindung werden durch entsprechende Betätigung der Handachse VI bzw. der Abtriebsachse (22) die relativ ortsfesten Kupplungselemente (72), die z.B. als Rastöffnungen ausgebildet sind, in axial fluchtende Stellungen zum beweglichen Kupplungselement (71) gebracht, welches durch Betätigung des Antriebs (73) axial verschoben wird, wobei es den drehschlüssigen Eingriff mit den Kupplungselementen (72) wechselt.

Zur Sicherung der Kupplungsfunktion können den relativ ortsfesten Kupplungselementen (72) Positionsmelder (84,85) zuordnet sein. Ein Wechsel des Kupplungseingriffs ist nur möglich, wenn mindestens einer der Positionsmelder (84,85) die korrekte Stellung signalisiert. Anhand der Positionsmelder (84,85) kann außerdem überprüft werden, ob der Wechsel des Kupplungseingriffs korrekt abgelaufen ist und der Rastbolzen (71) sicher und formschlüssig in die Raste (72) eintaucht. Die Positionsmelder (84,85) können mittels außen am Kupplungsgehäuse (63) verlegter Leitungen (86,87) mit der Robotersteuerung verbunden sein. Sie sind hierzu an die Leitungszuführung (61) und an einen nachfolgend erläuterten Leitungsanschluss (67) angeschlossen.

In Abwandlung der gezeigten Ausführungsform kann das Arbeitsgerät (23) in beliebig anderer Weise ausgebildet sein. Es kann sich insbesondere um ein anderes Werkzeug handeln, z.B. ein Schweißwerkzeug, eine Klebepistole, eine Greifeinrichtung, ein Bördelwerkzeug oder dergleichen. Das Arbeitsgerät (23) muss auch nicht in einen Korpus (24) und einen darin drehbar gelagerten Arbeitskopf (25) aufgeteilt sein, sondern kann als einheitliches Werkzeug mit dem Flansch (66) an der Abtriebsseite der Drehanschlusskupplung (62) verbunden sein.

Auch das Zusatzgerät (30) kann von beliebig anderer Art und Form sein. Figur 10 und 11 zeigen eine Variante mit einem Kamerasystem am Gestell (35). Das Zusatzgerät (30) muss auch nicht eine Vermessungseinrichtung oder eine Sensorik sein, sondern kann in beliebig anderer Weise ausgebildet sein. Es kann ggf. auch eigene Bewegungsachsen besitzen. In Streckstellung der Roboterhand (19) und bei Kopplungen des Drehteils (68) an die Momentenstütze (29) können das Arbeitsgerät (23) und das Zusatzgerät (30) auch relativ zueinander um die fluchtenden Handachsen IV und VI bzw. die Abtriebsachse (22) gedreht werden. Wegen der Momentenstütze (29) kann der Drehwinkel des Zusatzgeräts (30) begrenzt sein.

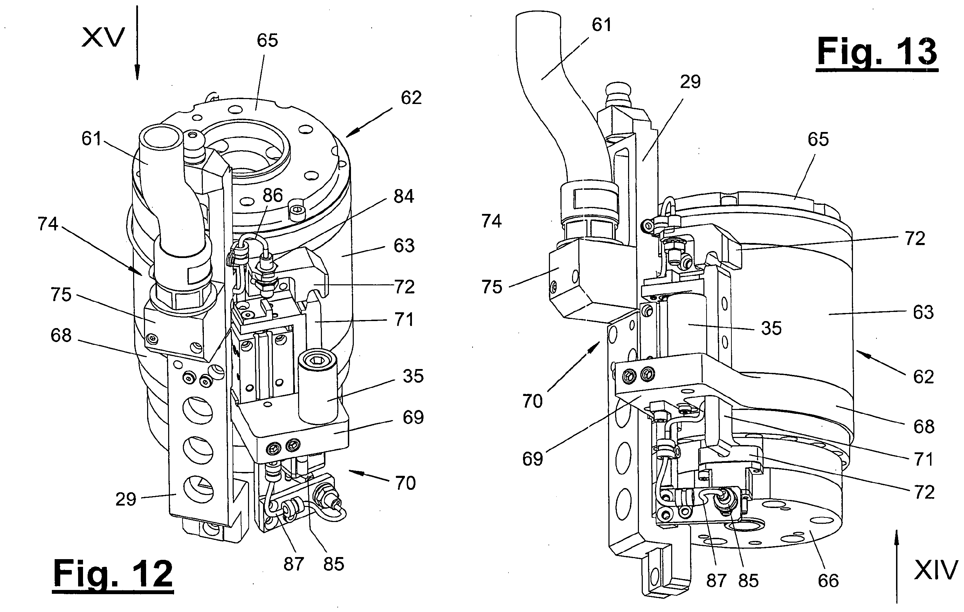

Figur 12 bis 21 zeigen ferner eine integrierte Leitungsführung (74), die eigenständige erfinderische Bedeutung hat und sich besonders gut mit der gezeigten Ausführungsform der Drehanschlusskupplung (62) kombinieren lässt. Durch die integrierte Leitungsführung (74) kann das Zusatzgerät (30) mit den benötigten Medien versorgt werden, wobei in diesem Zusammenhang elektrische Ströme ebenfalls als Medium verstanden werden. Hierbei kann es sich um Leistungsströme, Steuerströme, Signalströme oder dgl. handeln.

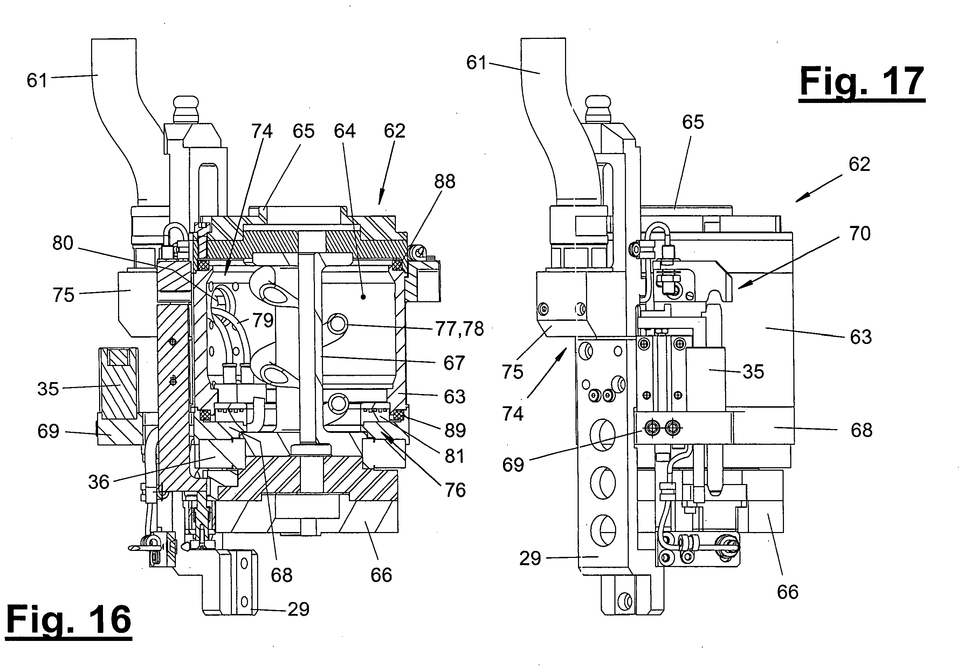

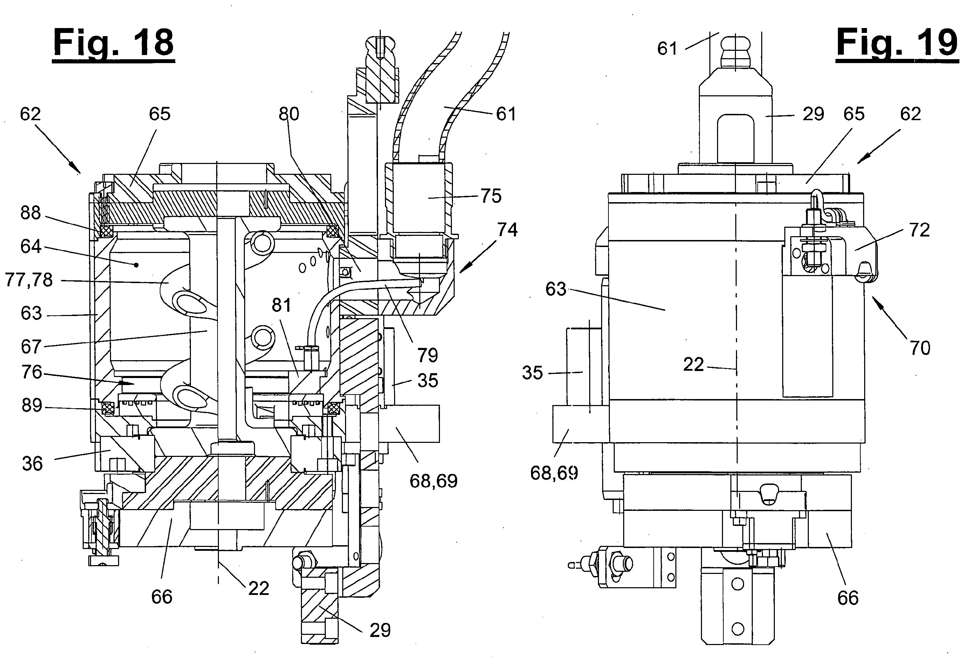

Wie insbesondere die Schnittdarstellungen von Figur 16 und 18 verdeutlichen, besitzt die Drehanschlusskupplung (62) ein hohles Kupplungsgehäuse (63), welches stirnseitig durch die Flansche (65,66) und umfangseitig durch einen im wesentlichen zylindrischen Gehäusemantel gebildet wird. Die koaxialen Flansche (65,66) sind durch eine Durchführung (67) miteinander drehschlüssig und starr verbunden, die z.B. wellenartig ausgebildet ist und sich zentral und koaxial zur Abtriebsachse (22) durch den Hohlraum (64) des Kupplungsgehäuses (63) erstreckt. Über die Durchführung (67) werden die Antriebskräfte übertragen und das Arbeitsgerät (23) an der Roboterhand (19) abgestützt.

Der Mantel des Kupplungsgehäuses (63) kann mit der Momentenstütze (29) bzw. mit dem Handgehäuse (20) drehfest verbunden sein und weist an seinem oberen und unteren Rand jeweils ein Drehlager (88,89) koaxial mit der Abtriebsachse (22) auf. Die Schnitte von Figur 16 und 18 verdeutlichen die Anordnung. Über das obere Drehlager (88) kann sich der obere Anschluss oder Flansch (65) relativ zum Gehäusemantel (63) drehen. Das untere Drehlager (89) ist zwischen den Gehäusemantel (63) und dem Drehteil (68) angeordnet und erlaubt dessen Relativdrehung.

Zwischen der Durchführung (67) und dem umfangseitigen Gehäusemantel besteht ein ausreichender zylindrischer Freiraum für die Verlegung von Leitungen (77,79). Hierbei können die Leitungen (77,79) unterschiedlich ausgebildet und angeschlossen sein. Die Leitung (77) ist z.B. als Signalleitung ausgebildet, mit der sensible elektrische Signale vom Zusatzgerät (30) und die integrierte Leitungsführung (74) nach außen übermittelt werden. Die andere Leitung (79) ist für Betriebsmittel oder Medien, z.B. Fluide oder Leistungs- bzw. Steuerströme, vorgesehen. Solche Fluide können z.B. Gase, insbesondere Druckluft, und Flüssigkeiten, z.B. Hydrauliköl, Kühlmittel oder dgl. sein.

Die integrierte Leitungsführung (74) weist einen äußeren Leitungsanschluss (75) auf, der sich an geeigneter Stelle, z.B. an der Momentenstütze (29) befindet. Hier kann die Leitungsführung (61) münden, die außenseitig entlang des Roboterarms verlegt ist. In der Leitungsführung (61) können nur die Versorgungsleitungen für das Zusatzgerät (30) oder auch zusätzlich Versorgungsleitungen für das Arbeitsgerät (23) geführt werden, die dann ggf. vom äußeren Leitungsanschluss (75) weiter zu den Leitungsanschlüssen (28) am Korpus (24) geführt werden. Vom äußeren Leitungsanschluss (75) aus gelangen die Leitungen über eine Gehäuseöffnung (80) in den Hohlraum (64) .

Die integrierte Leitungsführung (74) weist auch einen inneren Leitungsanschluss (76) auf, der sich im Hohlraum (64) befindet und der unterschiedlich ausgebildet sein kann. Für die sensible Signalleitung (77) kann z.B. eine Spiralführung (78) der Leitung vorgesehen sein, die in ein oder mehreren Windungen durch den Hohlraum (64) verlegt ist und die vom externen Leitungsanschluss (75) direkt zu einem am Drehteil (68) befindlichen internen Leitungsanschluss (76) führt. Das Spiralkabel kann in ein oder mehreren Windungen um die Durchführung (67) gewunden sein. Durch den begrenzten Drehwinkel des Drehteils (68), der kleiner als 360° ist, wird die Spiralführung (78) in ihrer gewundenen Form nur bereichsweise aufgedreht und zugedreht, wobei die Verformungen und Belastungen in der Spiralführung (78) aufgenommen werden.

Die ein oder mehreren anderen Leitungen (79) für Betriebsmittel können über eine drehbare Medienkupplung (81) übertragen werden. Die Medienkupplung (81) kann für fluidische Medien und/oder für elektrische Ströme ausgelegt sein. Es kann sich insbesondere um eine multimediale Kupplung (81) handeln. Sie besteht aus einem stehenden Leitungsteil (82), welches z.B. als Bürstenkopf oder als Medienkopf ausgebildet ist und aus einem koaxial zur Abtriebsachse (22) drehenden Leitungsteil (83), welches z.B. als Schleifring für elektrische Ströme, als Nutenring für fluidische Medien oder dergleichen ausgebildet ist. In der gezeigten Ausführungsform ist das stehende Leitungsteil (82) am Kupplungsgehäuse (63) angebunden und das drehende Leitungsteil (83) am Drehteil (68). Die Anordnung kann auch umgekehrt sein.

Abwandlungen der gezeigten und beschriebenen Ausführungsformen sind in verschiedener Weise möglich. Insbesondere können einzelne Komponenten der Bearbeitungseinrichtung oder Abdichteinrichtung (9) weggelassen oder ausgetauscht werden. Auch die Stationsreihenfolge in der Fertigungsanlage (1) kann geändert werden. Ferner sind andere konstruktive Ausgestaltungen der Komponenten der Abdichteinrichtung (9) und insbesondere der Auftragvorrichtung (11) möglich. Anstelle von mehrachsigen Manipulatoren (16) können andere geeignete Bewegungseinheiten eingesetzt werden. Auf ein Öffnen und Schließen der Anbauteile (4) in der Abdichtstation (2) kann verzichtet werden. Auch die Global- oder Grobvermessung der Fahrzeugkarosserie (3) ist entbehrlich, wenn eine hinreichend genaue Karosseriepositionierung auf andere Weise, z.B. durch eine Spanneinrichtung oder dergleichen sichergestellt sein kann.

### BEZUGSZEICHENLISTE

- 1: Fertigungsanlage
- 2: Bearbeitungsstation, Abdichtstation
- 3: Fahrzeugkarosserie
- 4: Anbauteil, Türe, Klappe
- 5: Bauteilkante
- 6: Spalt
- 7: Falz, Falznaht
- 8: Abdichtung, Dichtmittel
- 9: Bearbeitungseinrichtung, Abdichteinrichtung
- 10:
- 11:
- 12:
- 13:
- 14:
- 15:
- 16: Manipulator, Roboter
- 17:
- 18: Transporteinrichtung, Lineareinheit
- 19: Manipulatorhand, Roboterhand
- 20: Handgehäuse
- 21: Abtriebsorgan, Abtriebsflansch
- 22: Abtriebsachse, Handachse VI
- 23: Arbeitsgerät, Auftraggerät
- 24: Korpus
- 25: Arbeitskopf, Auftragkopf, Düsenkopf
- 26: Auftragorgan, Düse
- 27: Düsenrohr
- 28: Leitungsanschluss
- 29: Momentenstütze
- 30: Zusatzgerät, Vermessungseinrichtung beweglich
- 31: Messkopf
- 32: Sensor
- 33: Strahlquelle, Lichtquelle
- 34: Messstrahl, Lichtstreifen
- 35: Gestell
- 36: Drehlager
- 37: Kupplungsstelle, Kupplung zu Momentenstütze
- 38: Kupplungsstelle, Kupplung zu Arbeitskopf
- 39:
- 40:
- 41:
- 42:
- 43:
- 44:
- 45:
- 46:
- 47:
- 48:
- 49:
- 50:
- 51:
- 52:
- 53:
- 54:
- 55:
- 56:
- 57:
- 58: Dichtmittelversorgung
- 59: Dosiereinrichtung
- 60: Kühleinrichtung
- 61: Leitungszuführung
- 62: Drehanschlusskupplung
- 63: Kupplungsgehäuse
- 64: Hohlraum
- 65: Anschluss, Flansch Antriebsseite
- 66: Anschluss, Flansch Abtriebsseite
- 67: Durchführung, Flanschverbindung
- 68: Anschluss, Drehteil
- 69: Sockel
- 70: Kupplungseinrichtung
- 71: Kupplungselement beweglich, Bolzen
- 72: Kupplungselement ortsfest, Raste
- 73: Kupplungsantrieb
- 74: integrierte Leitungsführung
- 75: Leitungsanschluss außen
- 76: Leitungsanschluss innen
- 77: Leitung, Signalleitung
- 78: Spiralführung
- 79: Leitung für Betriebsmittel
- 80: Gehäuseöffnung
- 81: drehbare Medienkupplung
- 82: Leitungsteil stehend, Bürste, Medienkopf
- 83: Leitungsteil drehend, Schleifring, Nutenring
- 84: Positionsmelder
- 85: Positionsmelder
- 86: Leitung
- 87: Leitung
- 88: Drehlager
- 89: Drehlager

## Patentansprüche

1. Drehanschlusskupplung für eine mehrachsige Roboterhand (19) mit einem beweglichen, insbesondere drehbaren Handgehäuse (20) und einem daran drehbaren Abtriebsorgan (21), **dadurch**
**gekennzeichnet, dass** die Drehanschlusskupplung (62) Anschlüsse (65,66,68) für das Abtriebsorgan (21), ein Arbeitsgerät (23) und ein Zusatzgerät (30) aufweist, wobei das Arbeitsgerät (23) und das Zusatzgerät (30) relativ zueinander drehbar sind und das Zusatzgerät (30) mit dem Handgehäuse (20) oder mit dem Arbeitsgerät (23) bzw. mit dem Abtriebsorgan (21) koppelbar ist, wobei die Drehanschlusskupplung (62) eine Kupplungseinrichtung (70) mit mehreren Kupplungsstellen (37,38) aufweist, die alternativ steuerbar sind, wobei der Anschluss (68) für das Zusatzgerät (30) mittels der Kupplungseinrichtung (70) wahlweise drehschlüssig mit dem Arbeitsgerät (23) gekuppelt oder entkuppelt werden kann.

2. Drehanschlusskupplung nach Anspruch 1, **dadurch**
**gekennzeichnet, dass** die Drehanschlusskupplung (62) eine integrierte Leitungsführung (74) zur Versorgung des Zusatzgeräts (30) aufweist.

3. Drehanschlusskupplung nach Anspruch 1 oder 2,
**dadurch gekennzeichnet, dass** die Drehanschlusskupplung (62) ein Kupplungsgehäuse (63) mit koaxialen und drehschlüssig verbundenen Flanschen aufweist, welche die Anschlüsse (65,66) für das Abtriebsorgan (21) und das Arbeitsgerät (23) bilden.

4. Drehanschlusskupplung nach Anspruch 3, **dadurch**
**gekennzeichnet, dass** am Kupplungsgehäuse (63) ein Drehteil drehbar gelagert (36) ist, welches den Anschluss (68) für das Zusatzgerät (30) bildet und koaxial zu den Flanschen (65,66) drehbar ist.

5. Drehanschlusskupplung nach Anspruch 3 oder 4,
**dadurch gekennzeichnet, dass** die Kupplungseinrichtung (70) außenseitig am Kupplungsgehäuse (63) gelagert ist.

6. Drehanschlusskupplung nach einem der Ansprüche 3 bis 5, **dadurch gekennzeichnet, dass** die Kupplungseinrichtung (70) ein bewegliches Kupplungselement mit einem Kupplungsantrieb (73) am Kupplungsgehäuse (63) und relativ ortsfeste Kupplungselemente (72) am Arbeitsgerät (23) oder am Abtriebsorgan (21) einerseits und am Handgehäuse (20) oder einer dortigen Momentenstütze (29) andererseits aufweist.

7. Drehanschlusskupplung nach einem der Ansprüche 3 bis 6, **dadurch gekennzeichnet, dass** das Kupplungsgehäuse (63) einen von außen und vom Drehteil (68) zugänglichen Hohlraum (64) für die integrierte Leitungsführung (74) aufweist, wobei die Flansche (65,66) durch eine den Hohlraum (64) durchsetzende wellenartige Durchführung (67) verbunden sind.

8. Drehanschlusskupplung nach einem der Ansprüche 3 bis 7, **dadurch gekennzeichnet, dass** die integrierte Leitungsführung (74) einen relativ ortsfesten Leitungsanschluss (75) außerhalb des Kupplungsgehäuses (63) und einen Leitungsanschluss (76) innerhalb des Kupplungsgehäuses (63) sowie verbindende Leitungen (77,79) aufweist.

9. Drehanschlusskupplung nach Anspruch 8, **dadurch**
**gekennzeichnet, dass** der innere Leitungsanschluss (76) mindestens eine drehbare Medienkupplung (81) angeordnet ist, die für fluidische Medien und/oder für elektrische Ströme ausgelegt ist.

10. Drehanschlusskupplung nach Anspruch 8 oder 9,
**dadurch gekennzeichnet, dass** zwischen den Leitungsanschlüssen (75,76) eine Signalleitung (77) in einer Spiralführung (78) um die zentrale Durchführung (67) verlegt ist.

11. Arbeitsvorrichtung, insbesondere Auftragvorrichtung (11) für ein Dichtmittel (8) an einem Falz eines Anbauteils (4) einer Fahrzeugkarosserie (3), **dadurch**
**gekennzeichnet, dass** die Arbeitsvorrichtung (11) mindestens einen mehrachsigen Manipulator (16) mit einer mehrachsigen Manipulatorhand (19) aufweist, wobei an der Manipulatorhand (19) eine Drehanschlusskupplung (62) mit einem Arbeitsgerät (23) und einem Zusatzgerät (30) angeordnet sind, wobei die Drehanschlusskupplung (62) nach einem der Ansprüche 1 bis 10 ausgebildet ist.

12. Vorrichtung nach Anspruch 11, **dadurch**
**gekennzeichnet, dass** das Arbeitsgerät (23) als Auftraggerät für ein pastöses oder flüssiges Dichtmittel und das Zusatzgerät (30) als Vermessungseinrichtung ausgebildet sind.

13. Verfahren zum Auftrag eines Dichtmittels (8) an einem Falz (7) eines Anbauteils (4) einer Fahrzeugkarosserie (3), **dadurch**
**gekennzeichnet, dass** das Dichtmittel (8) von einem mehrachsigen Manipulator (16) mit einer mehrachsig beweglichen Auftragvorrichtung (11) und mit einer Drehanschlusskupplung (62) nach einem der Ansprüche 1 bis 10 an einem Anbauteil (4) nach dessen Montage an der Fahrzeugkarosserie (3) aufgebracht wird, wobei das Anbauteil (4) mit einer von der Auftragvorrichtung (11) mitgeführten Vermessungseinrichtung (30) vermessen wird und der Dichtmittelauftrag nach den Messergebnissen gesteuert wird.

## Claims

1. Rotary coupling for a multiaxial robot hand (19) having a movable, in particular rotatable hand housing (20) and a drive member (21) that is rotatable thereon, **characterized in that** the rotary coupling (62) has connectors (65, 66, 68) for the drive member (21), a working device (23) and an auxiliary device (30), wherein the working device (23) and the auxiliary device (30) are rotatable relative to one another and the auxiliary device (30) is able to be coupled to the hand housing (20) or to the working device (23), or to the drive member (21), wherein the rotary coupling (62) has a coupling device (70) with a plurality of coupling points (37, 38) which are alternately controllable, wherein the connector (68) for the auxiliary device (30) can be selectively coupled to the working device (23) for conjoint rotation or uncoupled therefrom by means of the coupling device (70).

2. Rotary coupling according to Claim 1, **characterized in that** the rotary coupling (62) has an integrated line guide (74) for supplying the auxiliary device (30).

3. Rotary coupling according to Claim 1 or 2, **characterized in that** the rotary coupling (62) has a coupling housing (63) with coaxial flanges that are connected for conjoint rotation and form the connectors (65, 66) for the drive member (21) and the working device (23).

4. Rotary coupling according to Claim 3, **characterized in that** a rotary part is mounted in a rotatable manner (36) on the coupling housing (63), said rotary part forming the connector (68) for the auxiliary device (30) and being rotatable coaxially with the flanges (65, 66).

5. Rotary coupling according to Claim 3 or 4, **characterized in that** the coupling device (70) is mounted on the outside of the coupling housing (63) .

6. Rotary coupling according to one of Claims 3 to 5, **characterized in that** the coupling device (70) has a movable coupling element with a coupling drive (73) on the coupling housing (63) and relatively stationary coupling elements (72) on the working device (23) or on the drive member (21), for the one part, and on the hand housing (20) or a torque compensator (29) located there, for the other part.

7. Rotary coupling according to one of Claims 3 to 6, **characterized in that** the coupling housing (63) has a cavity (64) for the integrated line guide (74), said cavity (64) being accessible from the outside and from the rotary part (68), wherein the flanges (65, 66) are connected by a shaft-like bushing (67) that passes through the cavity (64).

8. Rotary coupling according to one of Claims 3 to 7, **characterized in that** the integrated line guide (74) has a relatively stationary line connector (75) outside the coupling housing (63) and a line connector (76) inside the coupling housing (63), and connecting lines (77, 79).

9. Rotary coupling according to Claim 8, **characterized in that** the inner line connector (76) is arranged at least one rotatable media coupling (81) which is designed for fluidic media and/or for electric currents.

10. Rotary coupling according to Claim 8 or 9, **characterized in that** a signal line (77) is laid in a helical guide (78) about the central bushing (67) between the line connectors (75, 76).

11. Work apparatus, in particular application apparatus (11) for a sealant (8) at a rebate of an attachment part (4) of a vehicle body (3), **characterized in that** the work apparatus (11) has at least one multiaxial manipulator (16) with a multiaxial manipulator hand (19), wherein a rotary coupling (62) having a working device (23) and an auxiliary device (30) are arranged on the manipulator hand (19), wherein the rotary coupling (62) is configured according to one of Claims 1 to 10.

12. Apparatus according to Claim 11, **characterized in that** the working device (23) is configured as an application device for a pasty or liquid sealant and the auxiliary device (30) is configured as a measuring device.

13. Method for applying a sealant (8) to a rebate (7) of an attachment part (4) of a vehicle body (3), **characterized in that** the sealant (8) is applied to an attachment part (4), after it has been mounted on the vehicle body (3), by a multiaxial manipulator (16) having a multiaxially movable application apparatus (11) and having a rotary coupling (62) according to one of Claims 1 to 10, wherein the attachment part (4) is measured by a measuring device (30) carried along by the application apparatus (11) and the application of sealant is controlled in accordance with the measurement results.

## Revendications

1. Système d'assemblage par joint tournant pour une main de robot multiaxiale (19) avec un boîtier de main mobile (20), en particulier rotatif, et un organe de sortie (21) pouvant tourner sur celui-ci, **caractérisé en ce que** le système d'assemblage par joint tournant (62) présente des raccords (65, 66, 68) pour l'organe de sortie (21), un appareil de travail (23) et un appareil supplémentaire (30), dans lequel l'appareil de travail (23) et l'appareil supplémentaire (30) peuvent tourner l'un par rapport à l'autre et l'appareil supplémentaire (30) peut être couplé au boîtier de main (20) ou à l'appareil de travail (23) ou encore à l'organe de sortie (21), dans lequel le système d'assemblage par joint tournant (62) présente un dispositif d'accouplement (70) avec plusieurs points de couplage (37, 38), qui peuvent être commandés en alternance, dans lequel le raccord (68) pour l'appareil supplémentaire (30) peut être au choix couplé en rotation à l'appareil de travail (23) ou découplé de celui-ci au moyen du dispositif d'accouplement (70).

2. Système d'assemblage par joint tournant selon la revendication 1, **caractérisé en ce que** le système d'assemblage par joint tournant (62) présente un guidage de conduites intégré (74) pour l'alimentation de l'appareil supplémentaire (30).

3. Système d'assemblage par joint tournant selon la revendication 1 ou 2, **caractérisé en ce que** le système d'assemblage par joint tournant (62) présente un boîtier d'accouplement (63) avec des brides coaxiales et assemblées de façon solidaire en rotation, qui forment les raccords (65, 66) pour l'organe de sortie (21) et l'appareil supplémentaire (23).

4. Système d'assemblage par joint tournant selon la revendication 3, **caractérisé en ce qu'**une partie tournante est montée de façon tournante (36) sur le boîtier d'accouplement (63) et forme le raccord (68) pour l'appareil supplémentaire (30) et peut tourner de façon coaxiale par rapport aux brides (65, 66).

5. Système d'assemblage par joint tournant selon la revendication 3 ou 4, **caractérisé en ce que** le dispositif d'accouplement (70) est monté extérieurement sur le boîtier d'accouplement (63).

6. Système d'assemblage par joint tournant selon l'une quelconque des revendications 3 à 5, **caractérisé en ce que** le dispositif d'accouplement (70) présente un élément d'accouplement mobile avec un entraînement d'accouplement (73) sur le boîtier d'accouplement (63) et des éléments d'accouplement (72) relativement stationnaires sur l'appareil de travail (23) ou sur l'organe de sortie (21) d'une part et sur le boîtier de main (20) ou un support de couple local (29) d'autre part.

7. Système d'assemblage par joint tournant selon l'une quelconque des revendications 3 à 6, **caractérisé en ce que** le boîtier d'accouplement (63) présente une cavité (64) accessible de l'extérieur et par la partie tournante (68) pour le guidage de conduites intégré (74), dans lequel les brides (65, 66) sont reliées par un passage ondulé (67) traversant la cavité (64).

8. Système d'assemblage par joint tournant selon l'une quelconque des revendications 3 à 7, **caractérisé en ce que** le guidage de conduites intégré (74) présente un raccord de conduite relativement stationnaire (75) à l'extérieur du boîtier d'accouplement (63) et un raccord de conduites (76) à l'intérieur du boîtier d'accouplement (63) ainsi que des conduites de liaison (77, 79).

9. Système d'assemblage par joint tournant selon la revendication 8, **caractérisé en ce que** le raccord de conduites intérieur (76) comprend au moins un couplage de fluides rotatif (81), qui est conçu pour des milieux fluides et/ou pour des courants électriques.

10. Système d'assemblage par joint tournant selon la revendication 8 ou 9, **caractérisé en ce qu'**une ligne de signalisation (77) est posée dans un guidage en spirale (78) autour du passage central (67) entre les raccords de conduites (75, 76) .

11. Dispositif de travail, en particulier dispositif de dépôt (11) pour un moyen d'étanchéité (8) sur une feuillure d'un composant (4) d'une carrosserie de véhicule (3), **caractérisé en ce que** le dispositif de travail (11) présente au moins un manipulateur multiaxe (16) avec une main de manipulateur multiaxiale (19), dans lequel un système d'assemblage par joint tournant (62) avec un appareil de travail (23) et un appareil supplémentaire (30) est disposé sur la main de manipulateur (19), dans lequel le système d'assemblage par joint tournant (62) est réalisé selon l'une quelconque des revendications 1 à 10.

12. Dispositif selon la revendication 11, **caractérisé en ce que** l'appareil de travail (23) est réalisé sous la forme d'un appareil de dépôt pour un moyen d'étanchéité pâteux ou liquide et l'appareil supplémentaire (30) est réalisé sous la forme d'un dispositif de mesure.

13. Procédé de dépôt d'un moyen d'étanchéité (8) sur une feuillure (7) d'un composant (4) d'une carrosserie de véhicule (3), **caractérisé en ce que** l'on dépose le moyen d'étanchéité (8) au moyen d'un manipulateur multiaxe (16) avec un dispositif de dépôt multiaxe mobile (11) et avec un système d'assemblage par joint tournant (62) selon l'une quelconque des revendications 1 à 10 sur un composant (4) après son montage sur la carrosserie de véhicule (3), dans lequel on mesure le composant (4) avec un dispositif de mesure (30) accompagnant le dispositif de dépôt (11) et on commande le dépôt du moyen d'étanchéité en fonction des résultats de mesure.
